# EUROPÄISCHE PATENTSCHRIFT

(11) **EP 3 105 385 B1**
(45) Veröffentlichungstag und Bekanntmachung des Hinweises auf die Patenterteilung: **27.11.2019**
(21) Anmeldenummer: 15713840.5
(22) Anmeldetag: 10.02.2015
(51) Int. Cl.: E04B 1/62, E04D 12/00, E04B 1/66, B32B 27/34, B32B 27/12, B32B 27/30, B32B 27/40, B32B 5/02, E04D 5/06, E04D 5/10, E04D 11/02, E04B 1/64

(54) **FEUCHTEVARIABLE SCHUTZSCHICHT UND VERWENDUNG EINER FEUCHTEVARIABLEN SCHUTZSCHICHT**
MOISTURE-VARIABLE PROTECTIVE LAYER AND USE OF A MOISTURE-VARIABLE PROTECTIVE LAYER
COUCHE DE PROTECTION HYGROVARIABLE ET UTILISATION D'UNE COUCHE DE PROTECTION HYGROVARIABLE

(30) Priorität: 13.02.2014 DE 102014001919; 16.06.2014 DE 102014008530
(43) Veröffentlichungstag der Anmeldung: 21.12.2016
(73) Patentinhaber: Ewald Dörken AG, 58313 Herdecke (DE)
(72) Erfinder: RAIDT, Heinz-Peter, 44227 Dortmund (DE); SCHWAAB,Gilles, 44227 Dortmund (DE); HÖFER, Nicole, 58456 Witten (DE); SCHRÖER, Jörn, 58313 Herdecke (DE)
(74) Vertreter: Von Rohr Patentanwälte Partnerschaft mbB
(86) Internationale Anmeldenummer: PCT/EP2015/000279
(87) Internationale Veröffentlichungsnummer: WO 2015/120973

(56) Entgegenhaltungen:
- WO-A1-02/070251
- WO-A2-2006/002440
- DE-A1-102006 009 260
- DE-U1- 29 700 987
- DE-U1-202005 016 200
- FR-A1- 2 987 380
- FR-A1- 2 997 649

## Beschreibung

Die Erfindung betrifft eine Schutzschicht, insbesondere für den Einsatz zum Schutz einer Wärmedämmschicht in gedämmten Gebäudekonstruktionen, wie Dach- und/oder Wandkonstruktionen eines Gebäudes, die die Merkmale des Anspruchs 1 aufweist. Darüber hinaus betrifft die vorliegende Erfindung die Verwendung einer feuchtevariablen Schutzschicht in einer gedämmten Gebäudekonstruktion mit den Merkmalen der Ansprüche 11 oder 12.

Für wärmegedämmte Dach- und Wandkonstruktionen werden diffusionshemmende Schichten benötigt, um schädliche Tauwasserbildung zu vermeiden. Tauwasser entsteht, wenn feuchte Luft aufgrund von Wasserdampf-Partialdruck-Differenzen in die Konstruktion strömt und/oder diffundiert und der Taupunkt des Wasserdampfes aufgrund von Temperaturveränderung unterschritten wird.

Im mitteleuropäischen Winter herrscht in der Regel ein Wasserdampf-Diffusionsstrom vom Gebäudeinneren nach außen, da aufgrund niedriger Temperaturen und geringer Luftfeuchte ein niedriger Wasserdampf-Partialdruck außerhalb der Gebäude herrscht. In der gedämmten Konstruktion herrscht ein Temperaturgefälle von innen nach außen. Da Luft mit abnehmender Temperatur weniger Wasser aufnehmen kann, kann mit sinkender Temperatur in der Konstruktion der Taupunkt erreicht werden, so dass es zu einem Tauwasserausfall in der Konstruktion kommt. Im Sommer ist der Diffusionsstrom in der Regel entgegengesetzt, aber unkritisch, da der Taupunkt des Wassers aufgrund höherer Lufttemperaturen zumeist nicht unterschritten wird. Sollte gleichwohl Tauwasser anfallen, verdunstet dies bei höheren sommerlichen Lufttemperaturen in der Regel. Entsteht mehr Tauwasser als verdunsten kann, kann dies jedoch ebenfalls zu Bauschäden führen.

Um dem Diffusionsstrom mit Tauwasserausfall zu begegnen, werden Sperrschichten eingesetzt. Die Sperrwirkung von Bauteilen bzw. Schichten gegenüber Wasserdampfdiffusion wird hierbei durch die wasserdampfdiffusionsäquivalente Luftschichtdicke S_{d} beschrieben. Je größer der S_{d}-Wert ist, desto weniger Wasserdampf diffundiert durch die Schicht.

Aus dem Stand der Technik ist bekannt, zum Schutz vor Tauwasser rauminnenseitig ausschließlich Luft- und Dampfsperren mit konstanten, relativ hohen S_{d}-Werten einzusetzen, die die Wasserdampfdiffusion behindern bzw. vermeiden sollen. An der Außenseite der Wärmedämmung werden diffusionsoffenere Materialien verwendet, um eine sommerliche Austrocknung zu ermöglichen.

Zunehmend werden Bahnen bzw. Schutzschichten mit feuchtevariablem S_{d}-Wert eingesetzt, die beispielsweise in dem Dokument WO 96/33321 A1 beschrieben sind. Solche Bahnen haben in einem trockenen Klima bei einer mittleren relativen Luftfeuchtigkeit von 30 bis 50 % einen S_{d}-Wert von 2 m bis 5 m und in einem feuchten Klima bei einer mittleren relativen Luftfeuchtigkeit von 60 % bis 80 % einen S_{d}-Wert von < 1 m. Durch die Variabilität des S_{d}-Wertes wird erreicht, dass bei trockener Umgebung, wie sie beispielsweise im Winter in Innenräumen auftreten kann, wegen der hohen Sperrwirkung keine Feuchte in die Konstruktion eindiffundieren kann, während im Sommer ggf. vorhandene Feuchtigkeit aufgrund der verringerten Sperrwirkung der Bahnen nach außen diffundieren kann. Die zuvor beschriebene S_{d}-Wert-Kombination liefert in gemäßigten Klimaten, die für Holzkirchen oder Helsinki typisch sind, aber auch in sehr feuchten Regionen, die beispielsweise für Miami typisch sind, gute Ergebnisse. Wenn es allerdings sehr kalt und feucht ist bzw. bei feucht-warmen Innenklimaten, wie beispielsweise Badezimmern, kann es an der Außenseite einer Wärmedämmung, die beispielsweise aus Glaswolle besteht, zu hohen Feuchteakkumulationen kommen.

Aus dem Dokument EP 1 824 902 B1 ist eine Dampfbremsfolie auf Polyamidbasis als Teil einer gedämmten Gebäudekonstruktion mit einem von der Umgebungsfeuchte abhängigen Wasserdampf-Diffusionswiderstand bekannt. Dabei variieren die S_{d}-Werte zwischen > 5 m bei 30 % bis 50 % relativer Luftfeuchtigkeit und < 0,5 m bei 60 % bis 80 % relativer Luftfeuchtigkeit. Der Variationsbereich von Polyamiden ist allerdings begrenzt, wobei die maximalen oberen s_{d}-Werte im trockenen Bereich ca. 10 m betragen und die minimalen S_{d}-Werte im feuchten Bereich nicht wesentlich unter 0,2 m liegen.

Das Dokument WO 02/070251 A1 betrifft die Verwendung von lonomeren zur Abdichtung von Dämmstoffen. Ionomere sollen in Schichtform bei 25 % relativer Luftfeuchtigkeit einen S_{d}-Wert von 1 m bis 20 m und bei 72,5 % relativer Luftfeuchtigkeit einen S_{d}-Wert von 0,02 m bis 0,7 m aufweisen. Die Herstellung von Folien unter Verwendung von lonomeren ist jedoch kompliziert und kostspielig. Auch ist ein S_{d}-Wert von beispielsweise 1 m bei 25 % relativer Luftfeuchtigkeit zu gering, um eine Funktion als effektive Schutzschicht erfüllen zu können.

Aus dem Dokument WO 2011/069672 A1 ist eine feuchteadaptive Schutzschicht, insbesondere für den Einsatz zur Wärmedämmung von Gebäuden, bekannt, wobei die Schutzschicht aus einem Material gebildet wird, welches bei einer Feuchte von 45 % bis 58 % im Wesentlichen plateauartig innerhalb eines Bereichs von S_{d}-Werten von 2 m bis 5 m diffusionsäquivalenter Luftschichtdicke verläuft. Dadurch soll erreicht werden, dass bei nutzungsbedingter kurzzeitiger Feuchteerhöhung, wie beispielsweise in Küchen oder Schwimmbädern, nicht sofort eine Öffnung der Folie eintritt und dadurch zu viel Feuchte in die Konstruktion gelangen kann.

Feuchtevariable Schutzschichten können gemäß dem Dokument WO 2007/146391 A2 ein- oder mehrschichtig aufgebaut sein, beispielsweise als Beschichtung, mit einer großen Bandbreite an Variationen der chemischen Zusammensetzung.

Alle der zuvor beschriebenen feuchteadaptiven Schutzschichtn werden nur rauminnenseitig eingesetzt. Es besteht somit die Notwendigkeit, auf der Außenseite einer Wärmedämmung eine andere, diffusionsoffene Folie einzusetzen, um eine (sommerliche) Austrocknung zu ermöglichen. Die Auswahl geeigneter Schutzschichtn muss zudem stets unter Berücksichtigung diverser Klimabedingungen, insbesondere heißer Sommer und sehr kalter Winter, erfolgen.

Eine gattungsgemäße Schutzschicht ist aus der FR 2 987 380 bekannt. Diese Schutzschicht besteht aus einer Mischung aus einem Copolyamid einerseits und Ethylen-Vinyl-Alkohol-Copolymer andererseits. Bei einer relativen Feuchte von 25% beträgt der S_{d}-Wert dieser bekannten Schutzschicht weniger als 20 m.

Aus der DE 20 2005 016 200 U1 geht eine Dampfbremsfolie für die Wärmedämmung von Gebäuden hervor. Die Dampfbremsfolie weist feuchteadaptive Eigenschaften auf, wobei als Materialien Polyamid, Ethylen-Vinyl-Alkohol oder Polyethylencopolymere eingesetzt werden.

Darüber hinaus geht aus der FR 2 997 649 eine feuchtevariable Schutzschicht hervor, die aus einer mittleren Lage aus Ethylen-Vinyl-Alkohol besteht, die sandwichartig zwischen zwei Lagen aus Polyamid angeordnet ist.

Aufgabe der vorliegenden Erfindung ist es, eine feuchteadaptive bzw. feuchtevariable Schutzschicht zur Verfügung zu stellen, die verbesserte Eigenschaften zur Verhinderung von Beschädigungen der in der Gebäudekonstruktion verwendeten Baumaterialien durch Feuchtigkeit aufweist. Die Schutzschicht soll insbesondere für die Verwendung in gedämmten Dach- und/oder Wandkonstruktionen eines Gebäudes geeignet sein und hier eine exzellente Schutzwirkung für eine Wärmedämmschicht der Konstruktion erfüllen. Insbesondere soll die Schutzschicht für einen nahezu weltweiten bzw. klimaunabhängigen Einsatz in gedämmten Konstruktionen geeignet sein, wobei Beschädigungen der Konstruktion bis hin zum Versagen der Konstruktion durch Feuchteakkumulation nicht zu befürchten sind. Die Schutzschicht soll sich weiter insbesondere rauminnenseitig und raumaußenseitig gleichermaßen zur Verwendung in einer gedämmten Gebäudekonstruktion zum Schutz einer Wärmedämmschicht eignen und einem Versagen der Konstruktion durch Feuchteakkumulation vorbeugen.

Die vorgenannte Aufgabe wird durch eine feuchtevariable Schutzschicht mit den Merkmalen des Patentanspruchs 1 gelöst. Vorteilhafte Ausgestaltungen sind Gegenstand der Unteransprüche.

Erfindungsgemäß wird eine Schicht als feuchtevariabel bezeichnet, wenn sich der S_{d}-Wert der Schicht mit zunehmender oder abnehmender Feuchte der die Schicht umgebenden Luft derart ändert, dass sich insgesamt ein anderes bauphysikalisches Verhalten ergibt als bei konstantem S_{d}-Wert. Dieser Vorgang muss reversibel sein. Die Veränderung des bauphysikalischen Verhaltens muss dabei von einem stärker diffusionshemmenden zu einem stärker diffusionsoffenen Verhalten und umgekehrt stattfinden. Grundsätzlich steigt der S_{d}-Wert mit abnehmender Feuchte bzw. sinkt mit zunehmender Feuchte. Die S_{d}-Werte-Kurve über die Luftfeuchte ist hierbei nicht linear, weist wenigstens drei Kurvenabschnitte auf und enthält ein oder zwei Wendepunkte. Der absolute Wendepunkt, d.h. der Übergang zwischen diffusionshemmendem und diffusionsoffenem Verhalten liegt zwischen 50 und 90 % relativer Luftfeuchte. Über den gesamten Feuchtewertebereich kann der S_{d}-Wert zwischen 0,05 und 150 m betragen.

Die erfindungsgemäße Schutzschicht zeichnet sich dadurch aus, dass der S_{d}-Wert bei einer relativen Feuchte von 25% zwischen 20 m und 100 m liegt.

Um die geforderten Eigenschaften der Schutzschicht in Bezug auf die den Wasserdampfdiffusionswiderstand zu erfüllen, ist eine Folie als Schutzschicht aus einer Mischung eines Polyurethans mit einem Polymer mit Vinylalkohol als Monomeranteil und ggf. weiteren Komponenten erhältlich und/oder besteht aus einer solchen Mischung und/oder weist eine solche Mischung auf. Bei einem vinylalkoholhaltigem Polymer kann es sich beispielsweise um ein unter dem Handelsnamen EVAL erhältliches Polymer der Firma Kuraray handeln. EVAL-Harze bieten sehr gute Gas-Barriere-Eigenschaften und können mit konventioneller Fertigungsausrüstung einfach und kostengünstig verarbeitet werden. Erfindungsgemäße Harze haben einen Vinylalkoholgehalt von 52 Gew.-% bis 76 Gew.-%, vorzugsweise von 60 Gew.-% bis 70 Gew.-%, weiter vorzugsweise von 65 Gew.-% bis 68 Gew.-%. Es ist vorgesehen, dass der Polyurethananteil in der Mischung mehr als 50 Gew.-%, insbesondere mehr als 60 Gew.-%, weiter insbesondere mehr als 75 Gew.-%, beträgt, jeweils bezogen auf die Mischung.

Hinzuweisen ist der Vollständigkeit halber darauf, dass der S_{d}-Wert die wasserdampfdiffusionsäquivalente Luftschichtdicke beschreibt, bei der es sich um ein bauphysikalisches Maß für den Wasserdampfdiffusionswiderstand eines Bauteils oder einer Bauteilschicht handelt. Der S_{d}-Wert wird in der Einheit [m] angegeben und setzt sich physikalisch als Produkt aus der dimensionslosen Werkstoffkonstante Wasserdampfdiffusionswiderstandszahl µ des betreffenden Baustoffes bzw. Materials multipliziert mit der Bauteilschichtdicke S in der Einheit [m] zusammen.

Die erfindungsgemäße Schutzschicht zeichnet sich vorzugsweise dadurch aus, dass der S_{d}-Wert bei einer relativen Feuchte von 90 % zwischen 0,05 und 0,4 m beträgt, wobei der S_{d}-Wert vorzugsweise möglichst klein ist. Dabei sind bevorzugt Werte kleiner 0,1 m, insbesondere kleiner 0,09 m vorgesehen.

Bei einer relativen Feuchte von 80 % beträgt der S_{d}-Wert der erfindungsgemäßen Schutzschicht vorzugsweise 0,051 bis 150 m, ist jedoch stets größer als bei einer relativen Feuchte von 90 % und kleiner als bei einer relativen Feuchte von 50 %.

Bei einer relativen Feuchte von 65,5 % sollte der S_{d}-Wert zwischen 4 bis 20 m, bevorzugt zwischen 5 bis 15 m liegen, aber in jedem Falle größer sein als bei einer relativen Feuchte von 80 % und kleiner als bei einer relativen Feuchte von 50 %.

Bei einer relativen Feuchte von 50 % kann der S_{d}-Wert vorzugsweise zwischen 5 und 150 m betragen, ist jedoch stets größer als bei einer relativen Feuchte von 80 % und kleiner als bei einer relativen Feuchte von 25 %.

Bei einer relativen Feuchte von 37,5 % sollte der S_{d}-Wert zwischen 20 und 90 m, insbesondere zwischen 30 und 80 m liegen, wobei er stets größer ist als der S_{d}-Wert bei einer relativen Feuchte von 50 % und kleiner als bei einer relativen Feuchte von 25 %.

Bei einer relativen Feuchte von 25 % kann der S_{d}-Wert der erfindungsgemäßen Schutzschicht zwischen 10 und 150 m betragen, ist jedoch stets größer als bei einer relativen Feuchte von 50 %. Bevorzugt liegt der S_{d}-Wert bei einer relativen Feuchte von 25 % zwischen 40 bis 90 m.

Bei einer alternativen Ausführungsform können bereits geringere S_{d}-Werte bei einer relativen Feuchte von 25 % vorgesehen sein. Der S_{d}-Wert kann hierbei zwischen 10 und 30 m liegen. Anschließend nimmt der S_{d}-Wert kontinuierlich ab und liegt beispielsweise bei einer relativen Feuchte von 37,5 % zwischen 10 und 30 m, ist aber kleiner als bei einer relativen Feuchte von 25 %. Bei einer relativen Feuchte von 65,5 % liegt der S_{d}-Wert bevorzugt unter 10 m, während er bei einer relativen Feuchte von 80 % bevorzugt unter 0,1 m liegt. Bei einer relativen Feuchte von 90 % liegt der S_{d}-Wert ebenfalls unter 0,1 m, ist aber noch geringer als bei 80 %.

Bei allen Ausführungsformen ist es so, dass mit zunehmender relativer Luftfeuchte der S_{d}-Wert stets abnimmt.

Im Übrigen ist darauf hinzuweisen, dass in den vorgenannten Intervallen der S_{d}-Werte bei den einzelnen Werten der relativen Feuchte alle Zwischenintervalle und auch alle Einzelwerte als erfindungswesentlich offenbart anzusehen sind, auch wenn diese im einzelnen nicht angegeben sind.

Es versteht sich im Übrigen, dass die für unterschiedliche Luftfeuchten oben genannten S_{d}-Wertebereiche nicht in jedem Fall kumulativ bei der erfindungsgemäßen Schutzschicht erfüllt sein müssen. Wesentlich ist, dass die erfindungsgemäße Schutzschicht bei einer relativen Feuchte der die Schutzschicht umgebenden Atmosphäre im Bereich von 0 % bis 25 % einen S_{d}-Wert von größer 10 m und bei einer relativen Feuchte im Bereich von 90 % bis 100 % einen S_{d}-Wert von kleiner 0,4 m aufweist. Beispielsweise sind folgende Kombinationen von S_{d}-Wertebereichen bei den betrachteten Luftfeuchten als erfindungsgemäß anzusehen:

| Luftfeuchte [%] | 25 | 50 | 80 | 90 |
|---|---|---|---|---|
| S_{d}-Wert [m] | 10 | 5 | 0,11 | 0,05 |
| S_{d}-Wert [m] | 10 | 8,8 | 0,051 | 0,05 |
| S_{d}-Wert [m] | 10 | 9,999 | 9,998 | 0,4 |

Im Bereich einer relativen Feuchte von weniger als 25 % liegt der S_{d}-Wert der Schutzschicht unterhalb von dem S_{d}-Wertebereich, der bei einer relativen Luftfeuchte von 25 % erfindungsgemäß vorgesehen ist. Mit anderen Worten beträgt der S_{d}-Wert im Bereich einer relativen Luftfeuchte von weniger als 25 % mehr als 10 m bis mehr als 150 m.

Die Prüfung der Wasserdampfdurchlässigkeit und die Messung der S_{d}-Werte erfolgt gemäß DIN EN ISO 12572 bzw. DIN EN 1931 in Abhängigkeit vom Luftfeuchtebereich. Das feuchteadaptive Verhalten des Materials der Schutzschicht kann durch ab- oder adsorptive Prozesse, Quellung, andere physikalische Prozesse und/oder durch chemische Reaktionen bedingt und/oder reversibel sein.

In Zusammenhang mit der Erfindung umfangreich durchgeführte hygrothermische Simulationen zur Beurteilung der Feuchtesicherheit von gedämmten Baukonstruktionen, wobei die Berechnungen mit Hilfe des am Fraunhofer Institut für Bauphysik entwickelten Verfahrens zur Berechnung des instationären Wärme- und Feuchtetransports in Bauteilen WUFI® 5.2 durchgeführt worden sind, und auch umfangreich im Rahmen der Erfindung durchgeführte Versuche haben gezeigt, dass Schutzschichten mit den zuvor beschriebenen Wasserdampf-Diffusionseigenschaften deutlich verbesserte Eigenschaften zur Verhinderung von Beschädigungen der verwendeten Baumaterialien durch Feuchtigkeit aufweisen. Insbesondere aufgrund der hohen S_{d}-Werte bei geringen Luftfeuchten wird ein gefährlicher Tauwasserausfall in der gedämmten Konstruktion bei einem Wasserdampf-Diffusionsstrom von innen nach außen im europäischen Winter weitgehend ausgeschlossen. Bei hohen Luftfeuchtigkeiten ist dagegen der S_{d}-Wert der Schutzschicht möglichst gering, um den Austritt von Wasserdampf aus der Konstruktion zu erleichtern. Dadurch lassen sich etwaig anfallende Tauwassermengen verringern und Austrocknungsreserven erhöhen.

Die erfindungsgemäße Schutzschicht lässt sich vorteilhaft in gedämmten Gebäudekonstruktionen, insbesondere gedämmten Dach- und/oder Wandkonstruktionen eines Gebäudes, zum Schutz einer Wärmedämmschicht der Gebäudekonstruktion verwenden. Hierbei kann auf einer Außenseite der Wärmedämmschicht, insbesondere nachfolgend einer Gebäudebedachung aus Dachziegeln, Dachsteinen oder einem anderen Dachwerkstoff oder nachfolgend einer Fassadenbekleidung aus Stein, Holz oder einem anderen Fassadenwerkstoff einer hinterlüfteten Fassade, und/oder auf einer einem Gebäudeinneren des Gebäudes zugewandten Innenseite der Wärmedämmschicht, insbesondere vorgelagert einer nachfolgenden, durch Gipskarton oder dergleichen gebildeten Verkleidung, jeweils wenigstens eine feuchtevariable Schutzschicht für die Wärmedämmschicht vorgesehen sein. Weiter vorzugsweise ist jeweils eine Schutzschicht gebäudeinnenseitig und gebäudeau-ßenseitig vorgesehen und, insbesondere, unmittelbar an der Wärmedämmschicht angeordnet.

Die erfindungsgemäße Schutzschicht lässt sich nahezu weltweit bzw. klimaunabhängig einsetzen. Die S_{d}-Werte-Charakteristik der erfindungsgemäßen Schutzschicht macht die Verwendung unterschiedlicher Schutzschichten rauminnenseitig und raumaußenseitig entbehrlich. In einer gedämmten Gebäudekonstruktion kann die Schutzschicht dazu beitragen, das Versagen der Konstruktion durch Feuchteakkumulation zu verhindern.

Durch die S_{d}-Werte-Charakteristik der erfindungsgemäßen Schutzschicht lassen sich unbedenkliche Feuchtegehalte für unterschiedlichste Klimaregionen in gedämmten Gebäudekonstruktionen erreichen, insbesondere dann, wenn die wasserdampfdiffusionsäquivalenten Luftschichtdicken S_{d} der rauminnenseitig an der Wärmedämmschicht vorgesehenen Schutzschicht und der raumaußenseitig an der Wärmedämmschicht vorgesehenen Schutzschicht im Bereich einer relativen Feuchte von 0 % bis 25 % und/oder im Bereich einer relativen Feuchte von 80 % bis 100 %, vorzugsweise von 85 % bis 100 %, weniger als 20 %, vorzugsweise weniger als 10 %, voneinander abweichen. Die Abweichung zwischen den S_{d}-Werten beider Schutzschichten kann in den vorgenannten Bereichen auch weniger als 5 % betragen. Erfindungsgemäß werden auf der Außenseite und auf der Innenseite der Wärmedämmschicht Schutzschichten eingesetzt, die eine sehr ähnliche oder im Wesentlichen gleiche S_{d}-Werte-Charakteristik aufweisen. Auch im Bereich einer relativen Feuchte von 25 % bis 50 % und/oder von 50 % bis 80 %, vorzugsweise von 50 % bis 85 %, kann die Abweichung der wasserdampfdiffusionsäquivalenten Luftschichtdicken S_{d} beider Schutzschichten in den vorgenannten Bereichen liegen. Der Begriff "S_{d}-Werte-Charakteristik" betrifft hierbei die Abhängigkeit der wasserdampfdiffusionsäquivalenten Luftschichtdicke S_{d} des diffusionshemmenden Materials der Schutzschicht von der relativen Feuchte der die Schutzschicht umgebenden Atmosphäre.

Eine bevorzugte Verwendung der erfindungsgemäßen Schutzschicht in einer gedämmten Gebäudekonstruktion sieht vor, auf der Innenseite und auf der Außenseite der Wärmedämmschicht Schutzschichten einzusetzen, die im Bereich einer relativen Feuchte von 0 % bis 25 % und/oder im Bereich einer relativen Feuchte von 80 % bis 100 %, vorzugsweise von 85 % bis 100 %, eine identische von der Umgebungsfeuchte abhängige wasserdampfdiffusionsäquivalente Luftschichtdicke S_{d} aufweisen. Weiter vorzugsweise ist in diesem Zusammenhang vorgesehen, gleich ausgebildete bzw. dieselben Schutzschichten rauminnenseitig und raumaußenseitig an der Wärmedämmschicht einzusetzen. Dies führt zu einem einfachen Aufbau der Konstruktion und gewährleistet, dass sich die Gebäudekonstruktion in nahezu allen Klimaten vorteilhaft einsetzen lässt.

Der Erfindung liegt insbesondere die Idee zugrunde, durch Verwendung einer speziellen feuchtevariablen Schutzschicht mit erhöhtem Sperrwert bei trockener Umgebung und einem sehr niedrigen Sperrwert bei sehr hoher Feuchte sowohl an der Außenseite als auch an der Innenseite einer gedämmten Gebäudekonstruktion eine klimaunabhängige Bauweise der Gebäudekonstruktion zu ermöglichen. Die bislang bestehende Notwendigkeit, unterschiedliche Folien zur Erstellung der Dämmkonstruktion zu verwenden, entfällt damit. Auch ist es nicht mehr erforderlich, diverse Klimabedingungen, insbesondere heiße Sommer und sehr kalte Winter, durch Verwendung von unterschiedlichen Folien zu berücksichtigen.

Ein Merkmal der Schutzschicht ist vorzugsweise, dass das feuchtevariable Material aus energetischen und Holzschutzgründen eine Luftdichtheitsschicht bilden kann. Die Luftdichtheit mehrerer Schutzschichten untereinander kann mittels Selbstklebestreifen, Verschweißen, geeigneter Klebebänder oder geeigneter Klebemassen hergestellt werden. Eine Luftdichtheit ist notwendig, aber lediglich der gesamten Schutzschicht. Bei mehrschichtigem Aufbau müssen nicht alle Schichten jeweils luftdicht ausgebildet sein. An Gebäudeteile lässt sich die Schutzschicht mit geeigneten Klebemassen und/oder Kompribändern mit Lattenfixierung anbinden.

Das feuchtevariable Material kann als Platte und/oder Flächengebilde, insbesondere als (flexible) Folie bzw. Membran und/oder als Beschichtung eines Trägermaterials, weiter insbesondere als Streich- und/oder als Sprühbeschichtung eines Trägermaterials, ausgebildet sein und/oder ein solches Flächengebilde aufweisen. Die Folie kann als Polymerbeschichtung (einseitig oder beidseitig) auf ein Trägermaterial aufgebracht sein oder mit einem Trägermaterial einseitig oder beidseitig kaschiert sein, insbesondere wobei das Trägermaterial ein Gewebe oder ein Vlies sein kann. Zwischen der Folie und dem Trägermaterial kann eine Klebstoffschicht zur Verbesserung der Verbundhaftung vorgesehen sein. Das feuchtevariable Material kann bei der erfindungsgemäßen Schutzschicht auch eine haftklebrige Komponente zur Verbesserung der Verbundhaftung zwischen der Folie und einem Trägermaterial aufweisen. Die Schutzschicht kann mit Selbstklebestreifen oder mit einer vollflächigen Klebeschicht versehen sein.

Die Ausgangsstoffe zur Herstellung der Schutzschicht können in Form von Kunststoffgranulaten oder -dispersonen/-emulsionen und/oder Pulvern eingesetzt werden. Die Herstellung kann mittels Gießverfahren, Koagulation, Blasfolien- bzw. Folienextrusion erfolgen. Einzelne Schichten können kalandriert, laminiert, mittels Wärme oder Klebeschichten verbunden werden. Weiterhin ist Tauchen, Spritzen, Sprühen, Rakeln im Falle von flüssigen Komponenten möglich. Eine anschließende Wärmefixation oder Verstreckung oder Hydrophobierung eines Zwischenproduktes kann zur Herstellung der Schutzschichten notwendig sein.

Die erfindungsgemäße Schutzschicht weist vorzugsweise eine Schichtdicke von 10 µm bis 3 mm, weiter vorzugsweise von 20 µm bis 2 mm, besonders bevorzugt von 50 µm bis 1 mm, auf.

Das Flächengewicht der Schutzschicht kann zwischen 20 g/m² und 700 g/m², vorzugweise zwischen 50 g/m² und 270 g/m², betragen.

Das feuchtevariabel Material kann ein Polyamid (PA), insbesondere PA 6, PA 3, und/oder ein Polyamid-Copolymer aufweisen und/oder aus Polyamid, insbesondere PA 6, PA 3, und/oder einem Polyamid-Copolymer, als Ausgangsmaterial und ggf. weiteren Komponenten erhältlich sein und/oder bestehen.

Um die geforderten Eigenschaften in Bezug auf den Wasserdampf-Diffusionswiderstand zu erfüllen, kann das Material auch ein Ionomer aufweisen und/oder aus einem Ionomer als Ausgangsmaterial und ggf. weiteren Komponenten erhältlich sein und/oder bestehen. Auch ist es möglich, dass das Material ein Ethylen-Vinyl-Alkohol-Homo- oder Copolymer (EVAL) aufweist und/oder aus einem solchen erhältlich ist und/oder besteht.

Bei einem geeigneten feuchtevariablen Material kann es sich auch um Polyurethan (PU), insbesondere um ein thermoplastisches Polyurethan (TPU), handeln. Vorzugsweise kann ein auf Basis einer Kombination und/oder Reaktion von aliphatischen oder aromatischen Diisocyanaten mit Polyester-, Polyether-, Polyetherester-, Polycaprolactam- oder Polycarbonatdiolen erhältliches Polyurethan eingesetzt werden. Das Material kann als Folie ausgebildet sein und/oder eine Folie aufweisen, die auf Polyurethanbasis hergestellt ist und/oder aus Polyurethan besteht und/oder Polyurethan aufweist. Insbesondere kann eine Folie eingesetzt werden, die aus thermoplastischem Polyurethan hergestellt ist und/oder aus einem thermoplastischen Polyurethan besteht und/oder ein thermoplastisches Polyurethan aufweist. Das feuchtevariable Material kann auch zum Teil oder vollständig aus thermoplastischem Polyester-Elastomer (TPE-E), bekannt unter Handelsnamen wie Keyflex, Hytrel, Arnitel oder dergleichen, oder aus thermoplastischem Polyamid-Elastomer (TPE-A), bekannt beispielsweise unter dem Handelsnamen Pebax oder dergleichen, bestehen.

Alternativ ist es auch möglich, dass das diffusionshemmende Material ein Ethylen-Vinyl-Acetat (EVA) als Ausgangsmaterial aufweist und/oder aus einem Ethylen-Vinyl-Acetat und ggf. weiteren Komponenten erhältlich ist und/oder besteht.

Es versteht sich, dass das feuchtevariable Material auch aus einer Kombination und/oder Reaktion von wenigstens zwei der vorgenannten Ausgangsmaterialien erhältlich sein kann. Insbesondere kann das Material aus einer Kombination einer Komponente mit einem hohen Sperrwert und einer Komponente mit einem niedrigen Sperrwert, auch in Kombination mit weiteren Komponenten, bestehen. Durch Veränderung der Gewichtsanteile werden dabei die S_{d}-Werte/relative Luftfeuchte-Verhältnisse, aber auch andere Eigenschaften wie Härte oder Flexibilität, gezielt einstellbar.

Das feuchtevariable Material kann aktive oder passive Additive und/oder Füllstoffe enthalten. Als aktive Additive werden im Sinne der Erfindung solche verstanden, die Einfluss auf die Feuchtevariabilität des diffusionshemmenden Materials ausüben, indem sie beispielsweise Feuchte aufnehmen können. Beispielsweise kann als aktives Additiv eine pyrogene Kieselsäure, insbesondere eine unter dem Handelsnahmen AEROSlL® erhältliche Kieselsäure, vorgesehen sein. Passive Füllstoffe sind dagegen im Sinne der Erfindung solche, deren Eigenschaften feuchteunabhängig sind, wie beispielsweise Schichtsilikate. Als weitere Additive können Stabilisatoren oder Verarbeitungshilfsmittel eingesetzt werden.

Um die geforderten Eigenschaften in Bezug auf den Wasserdampf-Diffusionswiderstand weiter zu verbessern oder sicherzustellen, kann beispielsweise ein Polyurethan und/oder ein Ethylen-Vinyl-Alkohol-Polymer und/oder deren Mischung wenigstens einen Füllstoff als Zusatzstoff aufweisen, insbesondere ein Schichtsilikat, weiter insbesondere ein Nanoschichtsilikat. Schichtsilikate sind gasundurchlässige Plättchen. Sie bewirken aufgrund ihrer Ausrichtung im Kunststoff eine Barrierewirkung gegen Diffusion von Gasen, wie beispielsweise Wasserdampf. Idealerweise sind die Nanoclays so ausgerichtet, dass sie einen höheren Sperrwert und damit einen höheren S_{d}-Wert erzeugen können als das Matrixpolymer. Verwendet man ein Matrixpolymer, was bei erhöhter Feuchte quellen kann, kann das zum Aufrichten der Schichtsilikatplättchen dergestalt führen, dass durch die Erhöhung der Abstände zwischen den Schichten ein beschleunigter Wasserdampftransport an den Schichtgrenzen möglich ist und somit ein sehr geringer S_{d}-Wert erreicht wird.

Eine besonders hohe Sicherheit gegen ein ungewolltes Eindringen von Feuchtigkeit in die Konstruktion ist dann gegeben, wenn eine Änderung der relativen Feuchte der die Schutzschicht umgebenden Atmosphäre zu einer zeitversetzten Änderung der wasserdampfdiffusionsäquivalenten Luftschichtdicke S_{d} des Materials führt. Bei verzögerter Reaktion ist die Schutzschicht dann offen bzw. weist eine erhöhte Permeabilität für Wasserdampf auf, wenn die kurzfristige Feuchteerhöhung bereits wieder abgeklungen ist. Ein ungewollter Eintritt von Feuchte in die gedämmte Gebäudekonstruktion ist damit weitgehend ausgeschlossen. Ist Feuchtigkeit dagegen permanent im Inneren des Gebäudes und/oder der Gebäudekonstruktion vorhanden, kann die Feuchtigkeit entweichen, sobald die Folie offen ist.

Vorzugsweise ist das feuchtevariable Material derart ausgebildet, dass eine Erhöhung der relativen Feuchte beispielsweise von einem Bereich zwischen 0 % bis 25 % auf einen Bereich von 80 % bis 100 % zu einer Erniedrigung der wasserdampfdiffusionsäquivalenten Luftschichtdicke S_{d} des Materials beispielsweise auf einen S_{d}-Wert von kleiner 5 m, vorzugsweise kleiner 1 m, weiter vorzugsweise kleiner 0,1 m, nach 2 h bis 96 h, insbesondere nach 12 h bis 72 h, weiter insbesondere nach 24 h bis 28 h, führt. Da die Erniedrigung des S_{d}-Wertes zeitversetzt zur Erhöhung der Feuchte auftritt, kann eine kurzzeitige Erhöhung der Feuchte, wie sie bei der Gebäudenutzung, beispielsweise beim Kochen, auftreten kann oder auch nach einem Regenschauer, nicht dazu führen, dass zu viel Wasser in die Konstruktion eindringt. Dauerhaft anliegende Feuchte, wie sie im Inneren der Konstruktion auftreten kann, kann dagegen austreten.

Nachfolgend soll die Erfindung an Beispielen erläutert werden. Die nachfolgend beschriebenen hygrothermischen Simulationen wurden mit dem Simulationsprogramm WUFI® 5.2 durchgeführt. Die Berechnungen gehen grundsätzlich von den ungünstigsten Bedingungen aus. Folgende Randbedingungen wurden betrachtet:
- äußere Schicht ist vollflächig (Bedachung bzw. Fassadenbekleidung);
- die Hinterlüftungsebene hat Feuchtespeicherfunktion und es wird mit einer Luft- und Feuchtequelle gerechnet;
- die Dachneigung beträgt 35°, es wird von rotem Dachziegel mit Regenanhaftung entsprechend Neigung gerechnet;
- bei Fassaden wird Holzbekleidung angenommen;
- die Gebäude werden in Richtung der geringsten Strahlungsenergiemenge ausgerichtet, um den ungünstigsten Fall zu simulieren;
- es wurde vom 1. September 2013 bis 1. September 2018 in Zwei-Stunden-Schritten gerechnet;
- falls bei den Klimadaten mehrere Datensätze hinterlegt waren, wurde der ungünstigste Fall angenommen;
- an der Innenseite wurde eine Installationsebene von 25 mm und eine Gipskartonplatte angeordnet;
- die Ausgangsfeuchte über das Bauteil wurde auf konstant 80 % festgelegt;
- das Innenklima wurde abhängig vom Außenklima nach EN 15026 mit hoher Feuchtelast kalkuliert.

### Beispiel 1

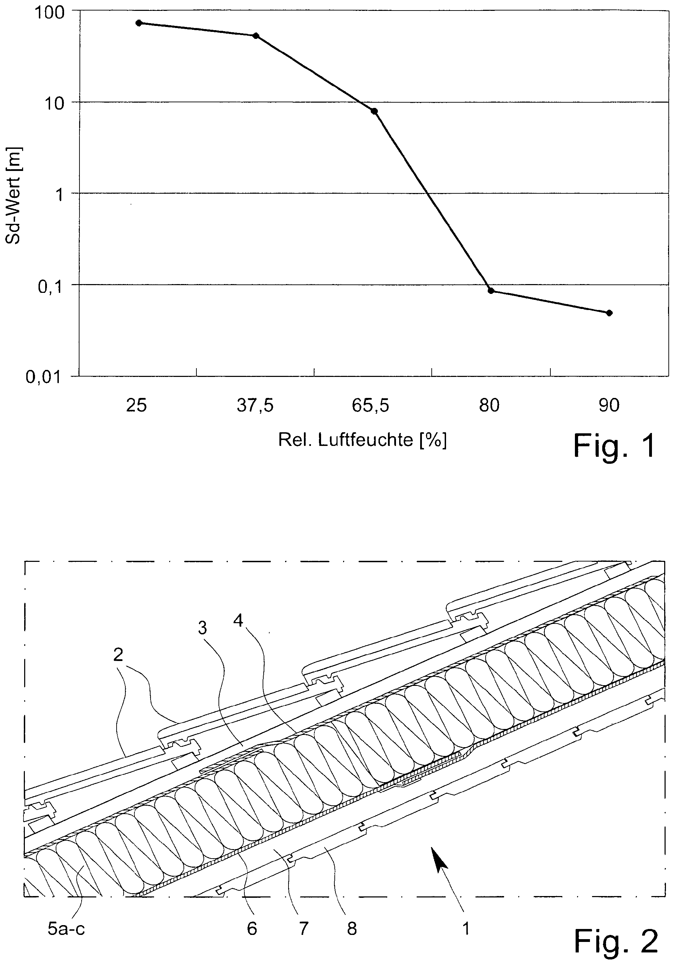

Ein Compound, bestehend zu 60 Gew.-% aus einem Ether-TPU der Marke DESMOPAN der Firma Bayer und zu 40 Gew.-% aus einem Ethylen-Vinyl-Alkohol-Copolymer der Marke EVAL F der Firma Kuraray wurde zu einer Gießfolie als Schutzschicht mit einem Flächengewicht von 100 g/m² gegossen. In Fig. 1 sind die S_{d}-Werte für die Schutzschicht bei verschiedenen relativen Luftfeuchtigkeiten der Umgebung aufgeführt. Die Prüfung der Wasserdampfdurchlässigkeit und die Messung der S_{d}-Werte erfolgte nach den Richtlinien der DIN ISO EN 12572 bzw. 1931.

Auf der Grundlage der in Fig. 1 aufgeführten und in Versuchen mit der Gießfolie ermittelten Wertepaare von S_{d}-Werten und Werten für die zugehörigen relativen Luftfeuchtigkeiten wurden hygrothermische Simulationen zur Beurteilung der Feuchtesicherheit einer Standard-Steildachkonstruktion 1 durchgeführt. Die erfindungsgemäßen Schutzschichten 4, 6 weisen eine gleiche S_{d}-Werte-Charakteristik entsprechend Fig. 1 auf.

Die bei den hygrothermischen Simulationen betrachtete Dachkonstruktion 1 ist schematisch in Fig. 2 gezeigt und weist folgenden Aufbau beginnend an der äußeren Dachhaut auf:

| **Schicht/Material (von außen nach innen)** | **Dicke [m]** |
|---|---|
| Dachziegel (2) | 0,01 |
| Luftschicht (3) | 0,025 |
| Schutzschicht außen (4) | 0,001 |
| Glaswolleschichten (5a - c) | 0,140 |
| Schutzschicht innen (6) | 0,001 |
| Luftschicht (7) | 0,025 |
| Gipskartonplatte (8) | 0,0125 |

Die Simulationen wurden mit Hilfe des oben erwähnten Verfahrens zur Berechnung des instationären Wärme- und Feuchtetransports in Bauteilen WUFI® 5.2 durchgeführt. Dabei wurde dieselbe Standard-Steildachkonstruktion 1 für diverse Klimazonen betrachtet. WUFI® 5.2 bietet eine umfangreiche Datensammlung diverser Klimate.

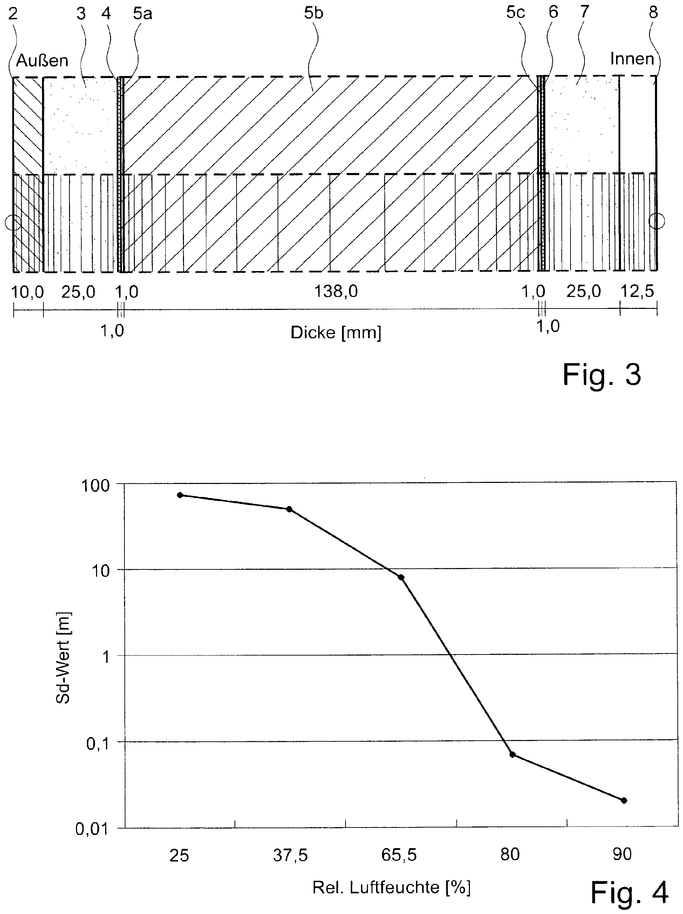

Die für die Simulation gewählte Schichtabfolge der Steildachkonstruktion 1 und die Schichtdicken zeigt schematisch Fig. 3. Es wurde eine äußere Glaswolleschicht 5a und eine innere Glaswolleschicht 5c jeweils angrenzend an eine der Schutzschichten 4,6, mit der Stärke von 1 mm betrachtet, wobei von einer Gesamtstärke der Dämmung von 140 mm ausgegangen wurde. Die Stärke einer mittleren Glaswolleschicht 5b betrug dementsprechend 138 mm. Es wurde zudem davon ausgegangen, dass eine erfindungsgemäße Schutzschicht 6 mit den belegten S_{d}-Werten rauminnenseitig und eine weitere Schutzschicht 4 außerhalb der Glaswolleschichten 5a bis 5c als äußere Schicht eingesetzt wird. Bewertet wurde der im Rahmen der Simulation ermittelte Wassergehalt der direkt an die Schutzschichten 4, 6 angrenzenden Glaswolleschichten 5a, 5c. Es wurden Klimate betrachtet, welche Standardbedingungen repräsentieren (Holzkirchen) und auch solche, die extreme Bedingungen wiedergeben (Karasjok, Miami).

Es konnten folgende unkritische Wassermengen in den Glaswolleschichten 5a, 5c bestimmt werden:

| Klimaregion | Klimatyp nach Neef | mittlere | | Wassermenge Glaswolle in g/m² | |
|---|---|---|---|---|---|
| | | Temperatur | Luftfeuchte | innen | außen |
| Holzkirchen | Übergangsklima | 6,8 (-20b32) | 81 | 4 | 26 |
| Miami/USA | Feuchtes Passatklima | 25 (6b34) | 71 | 10 | 8 |
| Malaga/Spanien | Winterregenklima der Westseiten | 18 (0b40) | 64 | 4 | 10 |
| Karasjok/Norwegen | (Arktisch) (sub)polar | -3,1 (-44b24) | 87 | 2 | 26 |
| Tokio/Japan | Subtropisches Ostseitenklima | 16(-1b35) | 62 | 6 | 5 |
| Christchurch/Neuseeland | Seeklima der Westseiten | 11 (-6b34) | 75 | 4 | 13 |
| Santiago de Chile | | 14 (0b27) | 62 | 2 | 7 |
| Anchorage/Alaska/USA | | 0,8 (-30b24) | 71 | 2 | 19 |
| Honulu warm | Tropisches Wechselklima | 25 (16b32) | 65 | 4 | 8 |
| *Las Vegas* | *Trockenes Passatklima* | *20 (-8b46)* | *25* | *4* | *6* |
| *Minneapolis* | *Kühles Kontinentalklima* | *6 (-32b35)* | *72* | *7* | *32* |
| | | | | | |
| *San Francisco* | *Winterregen der Wesseiten* | *14 (2b38)* | *71* | *2* | *13* |
| *Salt Lake City*/*USA* | *Klima der Hochgebirge* | *12 (-13b38)* | *61* | *3* | *14* |
| *Colorado Springs* | *Sommerwarmes Kontinentalklima* | *8 (-25b33)* | *57* | *2* | *6* |
| *Atlantic City* | *Ostseitenklima* | *12 (-21b34)* | *71* | *5* | *28* |

### Beispiel 2

Ein Vlies mit einem Flächengewicht von 70 g/m² wurde mit einem Compound, bestehend zu 65 Gew.-% aus einem Ether-Ester TPU der Marke DESMOPAN der Firma Bayer und zu 35 Gew.-% aus einem Ethylen-Vinyl-Akohol-Copolymer der Marke EVAL C der Firma Kuraray, mit einem Flächengewicht von 70 g/m² extrusionsbeschichtet. Mit der so erhaltenen Folie wurden Versuche durchgeführt, um S_{d}-Werte bei unterschiedlichen relativen Luftfeuchtigkeiten zu ermitteln.

Auf der Grundlage der in Fig. 4 aufgeführten und in Versuchen mit der Folie ermittelten Wertepaare von S_{d}-Werten und Werten für die zugehörigen relativen Luftfeuchtigkeiten wurden hygrothermische Simulationen zur Beurteilung der Feuchtesicherheit der oben beschriebenen Standard-Steildachkonstruktion 1 durchgeführt. Die Simulation erfolgte wie in Beispiel 1 beschrieben. Es konnten unkritische Tauwassermengen von weit unter 100 g/m² für die betrachteten Klimate ermittelt werden. Es konnten folgende Wassermengen in den Glaswolleschichten 5a, 5c bestimmt werden:

| Klimaregion | Klimatyp nach Neef | mittlere | | Wassermenge Glaswolle in g/m² | |
|---|---|---|---|---|---|
| | | Temperatur | Luftfeuchte | innen | außen |
| Holzkirchen | Übergangsklima | 6,8 (-20b32) | 81 | 3 | 19 |
| Miami/USA | Feuchtes Passatklima | 25 (6b34) | 71 | 6 | 8 |
| Malaga/Spanien | Winterregenklima der Westseiten | 18 (0b40) | 64 | 3 | 9 |
| Karasjok/Norwegen | (Arktisch) (sub)polar | -3,1 (-44b24) | 87 | 2 | 15 |
| Tokio/Japan | Subtropisches Ostseitenklima | 16 (-1b35) | 62 | 4 | 8 |
| Christchurch/Neuseeland | Seeklima der Westseiten | 11 (-6b34) | 75 | 3 | 12 |
| Santiago de Chile | | 14 (0b27) | 62 | 2 | 8 |
| Anchorage/Alaska/USA | | 0,8 (-30b24) | 71 | 2 | 15 |
| Honulu warm | Tropisches Wechselklima | 25 (16b32) | 65 | 3 | 9 |
| *Las Vegas* | *Trockenes Passatklima* | *20 (-8b46)* | *25* | *2* | *5* |
| *Minneapolis* | *Kühles Kontinentalklima* | *6 (-32b35)* | *72* | *4* | *14* |
| | | | | | |
| *San Francisco* | *Winterregen der Wesseiten* | *14 (2b38)* | *71* | *2* | *13* |
| *Salt Lake City*/*USA* | *Klima der Hochgebirge* | *12 (-13b38)* | *61* | *3* | *11* |
| *Colorado Springs* | *Sommerwarmes Kontinentalklima* | *8 (-25b33)* | *57* | *4* | *13* |
| *Atlantic City* | *Ostseitenklima* | *12 (-21b34)* | *71* | *3* | *4* |

Eine 41 %-ige, wässrige Polyether-Polyurethan-Dispersion der Firma Alberdingk-Boley wurde mit 5 Gew.-% Nano-Schichtsilikat gefüllt mittels Kugelmühle, homogenisiert und auf ein PET-Vlies mit einem Flächengewicht von 70 g/m² gera-kelt und mittels Wärmebehandlung vernetzt. Hierdurch wurde eine Folie mit einem Flächengewicht von 170 g/m² erhalten. Mit der so erhaltenen Folie wurden Versuche durchgeführt, um S_{d}-Werte bei unterschiedlichen relativen Luftfeuchtigkeiten zu ermitteln.

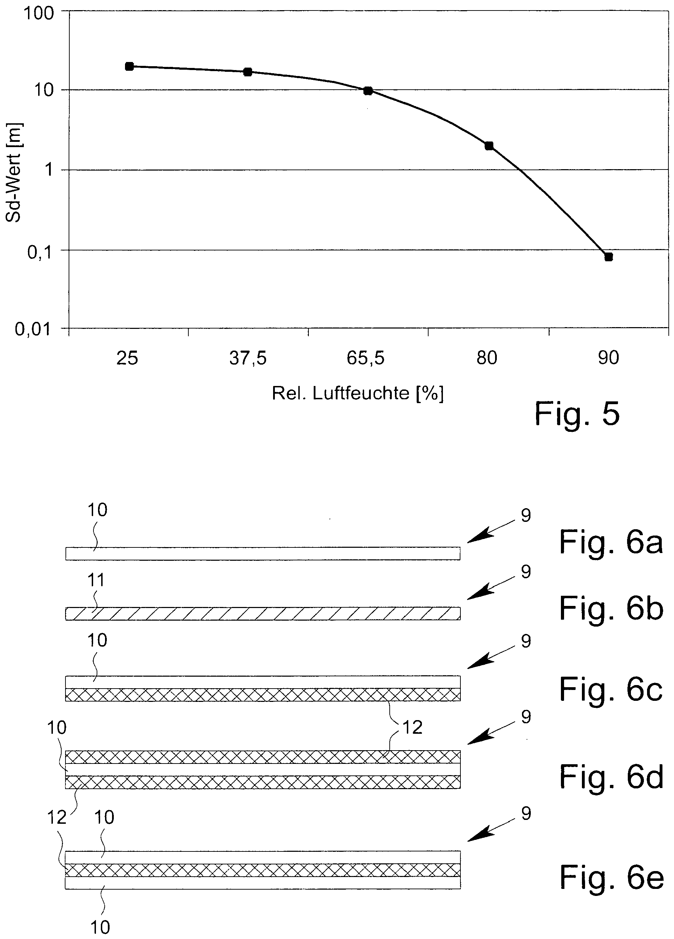

Auf der Grundlage der in Fig. 5 aufgeführten und in Versuchen mit der Folie ermittelten Wertepaare von S_{d}-Werten und Werten für die zugehörigen relativen Luftfeuchtigkeiten wurden hygrothermische Simulationen zur Beurteilung der Feuchtesicherheit der oben beschriebenen Standard-Steildachkonstruktion 1 durchgeführt. Die Simulation erfolgte wie oben beschrieben. Es konnten unkritische Tauwassermengen von weit unter 100 g/m² für die betrachteten Klimate ermittelt werden. Zudem zeigte sich eine gegenüber einem Feuchteanstieg zeitverzögerte Öffnung der Folie bzw. eine verzögerte Erniedrigung des s_{d}-Wertes der Folie. Beispielsweise wurde ein S_{d}-Wert von 0,07 m bei einer relativen Feuchtigkeit von 90 % nach ca. acht Stunden erreicht.

Es konnten folgende Wassermengen in den Glaswolleschichten 5a, 5c bestimmt werden:

| Klimaregion | Klimatyp nach Neef | mittlere | | Wassermenge Glaswolle in g/m² | |
|---|---|---|---|---|---|
| | | Temperatur | Luftfeuchte | innen | außen |
| Holzkirchen | Übergangsklima | 6,8 (-20b32) | 81 | 3 | 36 |
| Miami/USA | Feuchtes Passatklima | 25 (6b34) | 71 | 6 | 7 |
| Malaga/Spanien | Winterregenklima der Westseiten | 18 (0b40) | 64 | 3 | 10 |
| Karasjok/Norwegen | (Arktisch) (sub)polar | -3,1 (-44b24) | 87 | 2 | 120 |
| Tokio/Japan | Subtropisches Ostseitenklima | 16 (-1b35) | 62 | 6 | 7 |
| Christchurch/Neuseeland | Seeklima der Westseiten | 11 (-6b34) | 75 | 3 | 7 |
| Santiago de Chile | | 14 (0b27) | 62 | 2 | 6 |
| Anchorage/Alaska/USA | | 0,8 (-30b24) | 71 | 2 | 10 |
| Honulu warm | Tropisches Wechselklima | 25 (16b32) | 65 | 3 | 5 |
| *Las Vegas* | *Trockenes Passatklima* | *20 (-8b46)* | *25* | *4* | *5* |
| *Minneapolis* | *Kühles Kontinentalklima* | *6 (-32b35)* | *72* | *5* | *53* |
| | | | | | |
| *San Francisco* | *Winterregen der Wesseiten* | *14 (2b38)* | *71* | *2* | *14* |
| *Salt Lake Laty*/*UsA* | *Klima der Hochgebirge* | *12 (-13b38)* | *61* | *3* | *8* |
| *Colorado Springs* | *Sommerwarmes Kontinentalklima* | *8 (-25b33)* | *57* | *2* | *13* |
| *Atlantic City* | *Ostseitenklima* | *12 (-21b34)* | *71* | *4* | *49* |

In dem subpolar-arktischen Klima von Karasjok kommt es dabei zu einem signifikanten Anstieg der Wassermenge an der äußeren Schutzschicht. Die Menge von 120 g/m² ist zwar immer noch unkritisch, dennoch wären für diese Klimazone Folien aus Beispiel 1 oder 2 empfehlenswerter.

Die vorgenannten Wertebereiche umfassen jeweils sämtliche Zwischenwerte und -intervalle, auch wenn diese nicht ausdrücklich beziffert sind. Dennoch werden diese Zwischenwerte und -intervalle als erfindungswesentlich angesehen. Weitere Merkmale, Vorteile und Einzelheiten der Erfindung ergeben sich aus der nachfolgenden Beschreibung anhand der Zeichnung. Dabei zeigen:
- Fig. 6a-e: unterschiedliche Aufbauten von erfindungsgemäßen Dampfbremsfolien und
- Fig. 7: eine erfindungsgemäße gedämmte Gebäudekonstruktion.

In den Figuren 6a bis 6e sind unterschiedliche Aufbauten von Schutzschichten 9 gezeigt. Die gezeigten Schutzschichten 9 sind feuchteadaptiv bzw. feuchtevariabel ausgebildet und weisen jeweils wenigstens eine Folie 10, 11 auf, die einen von der Umgebungsfeuchte abhängigen Wasserdampf-Diffusionswiderstand zeigt und aufgrund einer ausreichenden Zug- und Druckfestigkeit für den Einsatz beim Bau in Gebäuden geeignet ist. Die in Fig. 6a gezeigte Schutzschicht 9 weist einen einschichtigen Aufbau auf und wird gebildet durch die Folie 10, die aus einer Mischung eines Polyurethans mit einem Ethylen-Vinyl-Alkohol-Polymer erhältlich ist. Die in Fig. 6b gezeigte Schutzschicht 9 weist ebenfalls einen einschichtigen Aufbau auf, der durch die Folie 11 gebildet wird, wobei die Folie 11 aus einem Polyurethan erhältlich ist und ein Nanoschichtsilikat aufweist.

Die in den Fig. 6c bis 6e gezeigten Schutzschichten 9 weisen jeweils einen mehrschichtigen Aufbau mit wenigstens einer Folie 10 und mit wenigstens einer weiteren Schicht auf, die durch ein Trägermaterial 12 gebildet wird. Bei dem Trägermaterial 12 kann es sich um ein Gewebe oder ein Vlies handeln. Bei der in Fig. 6d gezeigten Schutzschicht 9 ist die Folie 10 zwischen zwei äußeren Schichten des Trägermaterials 12 angeordnet. Bei der in Fig. 6d gezeigten Schutzschicht 9 kann die Folie 10 beidseitig mit einer Gewebe- und/oder Vliesschicht beschichtet sein. Insbesondere kann die Folie 10 beidseitig gewebe- und/oder vlieskaschiert sein. Bei der in Fig. 6e gezeigten Schutzschicht 9 sind zwei äußere Folien 10 mit einer dazwischenliegenden Schicht aus dem Trägermaterial 12 verbunden.

Es versteht sich, dass bei den in den Figuren 6c bis 6e gezeigten Aufbauten an der Stelle der Folie 10 auch die Folie 11 und/oder eine Folie vorgesehen sein kann, die aus einer Mischung eines Polyurethans mit einem Ethylen-Vinyl-Alkohol-Polymer erhältlich ist und ein Nanoschichtsilikat als Füllstoff aufweist.

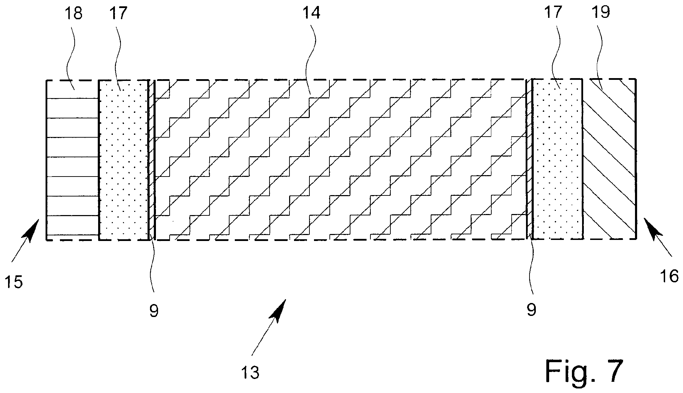

In Fig. 7 ist eine gedämmte Gebäudekonstruktion 13, bei der es sich um eine gedämmte Dach- und/oder Wandkonstruktion eines Gebäudes handeln kann, gezeigt. Die Gebäudekonstruktion 13 weist eine Wärmedämmschicht 14 vorzugsweise aus Mineralwolle auf. Auf einer Außenseite 15 der Wärmedämmschicht 14 und auf einer dem Gebäudeinneren zugewandten Innenseite 16 der Wärmedämmschicht 14 ist jeweils eine Folie als Schutzschicht 9 vorgesehen. Vorzugsweise sind auf beiden Seiten 15, 16 der Wärmedämmschicht 14 gleich bzw. identisch ausgebildete Schutzschichten 9 angeordnet. Die Schutzschichten 9 bestehen aus einer Folie oder Membran, die bei einer relativen Feuchte der die Schutzschicht 9 umgebenden Atmosphäre im Bereich von 0 % bis 25 % eine wasserdampfdiffusionsäquivalente Luftschichtdicke S_{d} von mehr als 10 m und bei einer relativen Feuchte der die Schutzschicht 9 umgebenden Atmosphäre im Bereich von 90 % bis 100 % einen S_{d}-Wert von kleiner 0,4 m aufweist.

Damit sind die Sperrwerte der Schutzschicht 9 so optimiert, dass sie sowohl an der Außenseite 15 als auch an der Innenseite 16 der Wärmedämmschicht 14 eingesetzt werden kann. An die Schutzschichten 9 schließt sich auf jeder Seite 15, 16 der Wärmedämmschicht 14 jeweils eine Luftschicht 17 an. Den Abschluss nach außen bildet eine Verkleidung 18, bei der es sich um eine durch Ziegel oder dergleichen gebildete Bedachung oder eine Fassadenbekleidung handeln kann, während den Abschluss nach innen eine Verkleidung 19 bildet, bei der es sich um eine Gipskartonwand oder andere übliche Innenbekleidungen handeln kann.

Die Gebäudekonstruktion 13 kann eine Schichtabfolge und/oder Schichtdicken aufweisen, die von der in Fig. 7 gezeigten Schichtabfolge und von den gezeigten Schichtdicken abweichen; lediglich die Position der erfindungsgemäßen Schutzschicht 9 direkt an der Außen- bzw. Innenseite des Wärmedämmpaketes steht fest.

### Bezugszeichenliste:

- 1: Dachkonstruktion
- 2: Dachziegel
- 3: Luftschicht
- 4: Schutzschicht
- 5a bis c: Glaswolleschichten
- 6: Schutzschicht
- 7: Luftschicht
- 8: Gipskartonplatte
- 9: Schutzschicht
- 10: Folie
- 11: Folie
- 12: Trägermaterial
- 13: Gebäudekonstruktion
- 14: Wärmedämmschicht
- 15: Außenseite
- 16: Innenseite
- 17: Luftschicht
- 18: Verkleidung
- 19: Verkleidung

## Patentansprüche

1. Feuchtevariable Schutzschicht (9), insbesondere für den Einsatz zum Schutz einer Wärmedämmschicht (11) in gedämmten Gebäudekonstruktionen (1), wie Dach- und/oder Wandkonstruktionen eines Gebäudes, die eine von der Umgebungsfeuchte abhängige wasserdampfdiffusionsäquivalente Luftschichtdicke S_{d} aufweist, wobei die Schutzschicht (9) zumindest zum Teil aus einem Material besteht und/oder ein Material aufweist, so dass die Schutzschicht (9) bei einer relativen Feuchte der die Schutzschicht (9) umgebenden Atmosphäre im Bereich von 0 % bis 25 % eine wasserdampfdiffusionsäquivalente Luftschichtdicke S_{d} der feuchtevariablen Schutzschicht (9) von größer 10 m und bei einer relativen Feuchte der die Schutzschicht (9) umgebenden Atmosphäre im Bereich von 90 % bis 100 % eine wasserdampfdiffusionsäquivalente Luftschichtdicke S_{d} von kleiner 0,4 m aufweist,
**dadurch gekennzeichnet,**
**dass** der S_{d}-Wert der feuchtevariablen Schutzschicht (9) bei einer relativen Feuchte von 25% zwischen 20 m und 100 m liegt und dass das Material aus einer Mischung eines Polyurethans mit einem Polymer mit Vinylalkohol als Monomeranteil erhältlich ist und/oder aus einer solchen Mischung besteht oder eine solche Mischung aufweist, wobei das Polymer mit Vinylalkohol einen Vinylalkoholgehalt zwischen 52 und 76 Gew.-% hat und wobei der Polyurethananteil in der Mischung mehr als 50 Gew.-% beträgt.

2. Schutzschicht (9) nach Anspruch 1, **dadurch gekennzeichnet, dass** der S_{d}-Wert bei einer relativen Feuchte von 25 % zwischen 40 m bis 90 m liegt und/oder dass der S_{d}-Wert bei einer relativen Feuchte von 37,5 % zwischen 20 m und 90 m, insbesondere zwischen 30 m und 80 m liegt und/oder dass der S_{d}-Wert bei einer relativen Feuchte von 65,5 % zwischen 4 m und 20 m, insbesondere zwischen 5 m und 15 m liegt und/oder dass der S_{d}-Wert bei einer relativen Feuchte von 80 % zwischen 0,07 m und 0,1 m liegt, insbesondere kleiner 0,1 m ist und/oder dass der S_{d}-Wert bei einer relativen Feuchte von 90 % kleiner 0,09 m ist.

3. Schutzschicht (9) nach Anspruch 1, **dadurch gekennzeichnet, dass** der S_{d}-Wert bei einer relativen Feuchte von 37,5 % zwischen 10 m und 30 m liegt, jedoch kleiner ist als bei einer relativen Feuchte von 25 % und/oder dass der S_{d}-Wert bei einer relativen Feuchte von 65,5 % zwischen 5 m und 15 m liegt, jedoch kleiner ist als bei einer relativen Luftfeuchte von 37,5 % und/oder dass der S_{d}-Wert bei einer relativen Feuchte von 80 % zwischen 0,8 m und 5 m, insbesondere zwischen 1 m und 3 m liegt und/oder dass der S_{d}-Wert bei einer relativen Feuchte von 90 % zwischen 0,08 m und 0,12 m, liegt, insbesondere kleiner als 0,1 m ist.

4. Schutzschicht (9) nach einem der vorhergehenden Ansprüche, **dadurch gekennzeichnet, dass** das Material als Flächengebilde, insbesondere als Folie und/oder als Beschichtung eines Trägermaterials, weiter insbesondere als Sprühbeschichtung eines Trägermaterials, ausgebildet ist und/oder ein solches Flächengebilde aufweist.

5. Schutzschicht (9) nach einem der vorhergehenden Ansprüche, **dadurch gekennzeichnet, dass** das Material ein Polyamid (PA), insbesondere PA 6, PA 3, und/oder ein Polyamid-Copolymer, aufweist und/oder aus einem Polyamid, insbesondere PA 6, PA 3, und/oder einem Polyamid-Copolymer, als Ausgangsmaterial und gegebenenfalls weiteren Komponenten erhältlich ist und/oder aus einem Polyamid, insbesondere PA 6, PA 3, und/oder einem Polyamid-Copolymer besteht.

6. Schutzschicht (9) nach einem der vorhergehenden Ansprüche, **dadurch gekennzeichnet, dass** das Material ein lonomer aufweist und/oder aus einem lonomer als Ausgangsmaterial und gegebenenfalls weiteren Komponenten erhältlich ist und/oder aus einem lonomer besteht.

7. Schutzschicht (9) nach einem der vorhergehenden Ansprüche, **dadurch gekennzeichnet, dass** das Material ein Ethylen-Vinyl-Alkohol-Homo- oder Copolymer aufweist und/oder aus einem Ethylen-Vinyl-Alkohol-Homo- oder Copolymer als Ausgangsmaterial und gegebenenfalls weiteren Komponenten erhältlich ist und/oder aus einem Ethylen-Vinyl-Alkohol-Homo- oder Copolymer besteht.

8. Schutzschicht (9) nach einem der vorhergehenden Ansprüche, **dadurch gekennzeichnet, dass** das Material ein thermoplastisches Polyurethan (TPU) aufweist und/oder aus einem thermoplastischen Polyurethan als Ausgangsmaterial und gegebenenfalls weiteren Komponenten erhältlich ist und/oder aus einem thermoplastischen Polyurethan, besteht.

9. Schutzschicht (9) nach einem der vorhergehenden Ansprüche, **dadurch gekennzeichnet, dass** das Material ein Ethylenvinylacetat (EVA) als Ausgangsmaterial aufweist und/oder aus einem Ethylenvinylacetat und gegebenenfalls weiteren Komponenten erhältlich ist und/oder aus einem Ethylenvinylacetat besteht.

10. Schutzschicht (9) nach einem der vorhergehenden Ansprüche, **dadurch gekennzeichnet, dass** eine Änderung der relativen Feuchte der die Schutzschicht (9) umgebenden Atmosphäre zu einer zeitversetzten Änderung der wasserdampfdiffusionsäquivalenten Luftschichtdicke S_{d} des Materials führt, wobei, vorzugsweise, eine Erhöhung der relativen Feuchte zu einer Erniedrigung der wasserdampfdiffusionsäquivalenten Luftschichtdicke S_{d} des Materials nach 2 h bis 96 h, insbesondere nach 12 h bis 72 h, weiter insbesondere nach 24 h bis 48 h, führt.

11. Verwendung einer Schutzschicht (9) nach einem der vorhergehenden Ansprüche in einer gedämmten Gebäudekonstruktion (10), insbesondere einer gedämmten Dach- und/oder Wandkonstruktion eines Gebäudes, zum Schutz wenigstens einer Wärmedämmschicht (10) der Gebäudekonstruktion (10), wobei auf einer Außenseite (12) der Wärmedämmschicht (11) oder auf einer dem Gebäudeinneren des Gebäudes zugewandten Innenseite (13) der Wärmedämmschicht (11) wenigstens eine feuchtevariable Schutzschicht (9) vorgesehen ist.

12. Verwendung einer Schutzschicht (9) nach einem der Ansprüche 1-10 in einer gedämmten Gebäudekonstruktion (10), insbesondere einer gedämmten Dach- und/oder Wandkonstruktion eines Gebäudes, zum Schutz wenigstens einer Wärmedämmschicht (10) der Gebäudekonstruktion (10), wobei auf einer Außenseite (12) der Wärmedämmschicht (11) und auf einer dem Gebäudeinneren des Gebäudes zugewandten Innenseite (13) der Wärmedämmschicht (11) wenigstens eine feuchtevariable Schutzschicht (9) vorgesehen ist.

13. Verwendung einer Schutzschicht (9) nach Anspruch 11 oder 12, **dadurch gekennzeichnet, dass** auf der Außenseite (12) der Wärmedämmschicht (11) und auf der Innenseite (13) der Wärmedämmschicht (11) eine Schutzschicht (9) nach einem der Ansprüche 1 bis 10 vorgesehen ist.

14. Verwendung einer Schutzschicht (9) nach Anspruch 13, **dadurch gekennzeichnet, dass** die wasserdampfdiffusionsäquivalenten Luftschichtdicken S_{d} beider Schutzschichten (9) im Bereich einer relativen Feuchte von 0 % bis 25 % oder im Bereich einer relativen Feuchte von 80 % bis 100 %, weniger als 20 %, vorzugsweise weniger als 10 %, voneinander abweichen.

15. Verwendung einer Schutzschicht (9) nach Anspruch 13, **dadurch gekennzeichnet, dass** die wasserdampfdiffusionsäquivalenten Luftschichtdicken S_{d} beider Schutzschichten (9) im Bereich einer relativen Feuchte von 0 % bis 25 % und im Bereich einer relativen Feuchte von 80 % bis 100 %, weniger als 20 %, vorzugsweise weniger als 10 %, voneinander abweichen.

## Claims

1. A moisture-variable protective layer (9), in particular for use for the protection of a heat-insulating layer (11) in insulated building constructions (1), such as roof and/or wall constructions of a building, which has a water vapour diffusion-equivalent air layer thickness S_{d} dependent on the ambient humidity, wherein the protective layer (9) at least partially consists of a material and/or comprises a material so that at a relative humidity of the atmosphere surrounding the protective layer (9) in the range of 0 % to 25 % has a water vapour diffusion-equivalent air layer thickness S_{d} of the moisture-variable protective layer (9) of greater than 10 m and at a relative humidity of the atmosphere surrounding the protective layer (9) in the range of 90 % to 100 % has a water vapour diffusion-equivalent air layer thickness S_{d} of less than 0.4 m,
**characterised in that**
the S_{d} value of the moisture-variable protective layer (9) is between 20 m and 100 m at a relative humidity of 25 % and that the material is obtainable from a mixture of a polyurethane with a polymer comprising vinyl alcohol as the monomer component and/or consists of such a mixture or has such a mixture, wherein the polymer comprising vinyl alcohol has a vinyl alcohol content between 52 and 76 wt.-% and wherein the polyurethane proportion in the mixture is more than 50 wt.-%.

2. Protective layer (9) according to claim 1, **characterised in that** the S_{d} value at a relative humidity of 25 % is between 40 m to 90 m and/or that the S_{d} value at a relative humidity of 37.5 % is between 20 m and 90 m, in particular between 30 m and 80 m and/or that the S_{d} value at a relative humidity of 65.5 % is between 4 m and 20 m, in particular between 5 m and 15 m and/or that the S_{d} value at a relative humidity of 80 % is between 0.07 m and 0.1 m, in particular less than 0.1 m, and/or that the S_{d} value at a relative humidity of 90 % is less than 0.09 m.

3. Protective layer (9) according to claim 1, **characterised in that** the S_{d} value at a relative humidity of 37.5 % is between 10 m and 30 m, but is smaller than at a relative humidity of 25 % and/or that the S_{d} value at a relative humidity of 65.5 % is between 5 m and 15 m, but is smaller than at a relative air humidity of 37.5 % and/or that the S_{d} value at a relative humidity of 80 % is between 0.8 m and 5 m, in particular between 1 m and 3 m, and/or that the S_{d} value at a relative humidity of 90 % is between 0.08 m and 0.12 m, in particular less than 0.1 m.

4. Protective layer (9) according to any one of the preceding claims, **characterised in that** the material is designed as a plane structure, in particular as a film and/or as a coating of a carrier material, more particularly as a spray coating of a carrier material, and/or comprises such a plane structure.

5. Protective layer (9) according to any one of the preceding claims, **characterised in that** the material comprises a polyamide (PA), in particular PA 6, PA 3, and/or a polyamide copolymer, and/or is obtainable from a polyamide, in particular PA 6, PA 3, and/or a polyamide copolymer, as a starting material and optionally other components and/or consists of a polyamide, in particular PA 6, PA 3, and/or a polyamide copolymer.

6. Protective layer (9) according to any one of the preceding claims, **characterised in that** the material comprises an ionomer and/or is obtainable from an ionomer as a starting material and optionally further components and/or consists of an ionomer.

7. Protective layer (9) according to any one of the preceding claims, **characterised in that** the material comprises an ethylene-vinyl alcohol homo- or copolymer and/or is obtainable from an ethylene-vinyl alcohol homo- or copolymer as a starting material and optionally other components and/or consists of an ethylene-vinyl alcohol homo- or copolymer.

8. Protective layer (9) according to any one of the preceding claims, **characterised in that** the material comprises a thermoplastic polyurethane (TPU) and/or is obtainable from a thermoplastic polyurethane as a starting material and optionally further components and/or consists of a thermoplastic polyurethane.

9. Protective layer (9) according to any one of the preceding claims, **characterised in that** the material comprises an ethylene-vinyl acetate (EVA) as a starting material and/or is obtainable from an ethylene-vinyl acetate and optionally further components and/or consists of an ethylene-vinyl acetate.

10. Protective layer (9) according to any one of the preceding claims, **characterised in that** a change in the relative humidity of the atmosphere surrounding the protective layer (9) leads to a time-delayed change in the water vapour diffusion-equivalent air layer thickness S_{d} of the material, wherein preferably an increase in the relative humidity leads to a reduction in the water vapour diffusion-equivalent air layer thickness S_{d} of the material after 2 h to 96 h, in particular after 12 h to 72 h, more particularly after 24 h to 48 h.

11. Use of a protective layer (9) according to any one of the preceding claims in an insulated building construction (10), in particular an insulated roof and/or wall construction of a building, for protecting at least one heat-insulating layer (10) of the building construction (10), wherein on an outer side (12) of the thermal barrier coating (11) or on an inner side (13) of the heat-insulating layer (11) facing the building interior of the building at least one moisture-variable protective layer (9) is provided.

12. Use of a protective layer (9) according to any one of claims 1-10 in an insulated building construction (10), in particular an insulated roof and/or wall construction of a building, for protecting at least one heat-insulating layer (10) of the building construction (10), wherein on an outer side (12) of the heat-insulating layer (11) and on an inner side (13) of the heat-insulating layer (11) facing the building interior of the building at least one moisture-variable protective layer (9) is provided.

13. Use of a protective layer (9) according to claim 11 or 12, **characterised in that** on the outer side (12) of the heat-insulating layer (11)and on the inner side (13) of the heat-insulating layer (11) a protective layer (9) according to one of claims 1 to 10 is provided.

14. Use of a protective layer (9) according to claim 13, **characterised in that** the water vapour diffusion-equivalent air layer thicknesses S_{d} of the two protective layers (9) in the range of a relative humidity of 0 % to 25 % or in the range of a relative humidity of 80 % to 100 % differ from each other by less than 20 %, preferably less than 10 %.

15. Use of a protective layer (9) according to claim 13, **characterised in that** the water vapour diffusion-equivalent air layer thicknesses S_{d} of the two protective layers (9) in the range of a relative humidity of 0 % to 25 % and in the range of a relative humidity of 80 % to 100 % differ from each other by less than 20 %, preferably less than 10 %.

## Revendications

1. Couche de protection hygrovariable (9) en particulier destinée à être utilisée pour protéger une couche d'isolation thermique (11) dans des structures de bâtiment isolées (1), telles que des structures de toit et/ou de mur d'un bâtiment, qui possède une épaisseur de couche d'air S_{d} équivalente à la diffusion de vapeur d'eau en fonction de l'humidité ambiante, la couche de protection (9) se composant au moins en partie d'un matériau et/ou contenant un matériau de sorte que la couche de protection (9) à une humidité relative de l'atmosphère entourant la couche de protection (9) dans la gamme de 0 % à 25 % a une épaisseur équivalente de diffusion de vapeur d'eau de la couche d'air S_{d} de la couche de protection hygrovariable (9) supérieure à 10 m et à une humidité relative de l'atmosphère entourant la couche de protection (9) dans la gamme de 90 % à 100 % a une épaisseur équivalente de diffusion de vapeur d'eau de la couche d'air S_{d} inférieure à 0,4 m,
**caractérisée en ce que**
la valeur S_{d} de la couche de protection hygrovariable (9) est comprise entre 20 et 100 m en présence d'une humidité relative de 25 % et **en ce que** le matériau peut être obtenu à partir d'un mélange d'un polyuréthane avec un polymère avec de l'alcool vinylique comme fraction monomère et/ou est constitué d'un tel mélange ou présente un tel mélange, le polymère avec l'alcool vinylique présentant une teneur en alcool vinylique comprise entre 52 et 76 % en poids et la teneur en polyuréthane du mélange étant supérieure à 50 % en poids.

2. Couche de protection (9) selon la revendication 1, **caractérisée en ce que** la valeur S_{d} est comprise entre 40 m et 90 m en présence d'une humidité relative de 25 % et/ou **en ce que** la valeur S_{d} est comprise entre 20 m et 90 m en présence d'une humidité relative de 37,5 %, en particulier est comprise entre 30 m et 80 m et/ou **en ce que** la valeur S_{d} est comprise entre 4 m et 20 m en présence d'une humidité relative de 65,5 %, en particulier entre 5 m et 15 m et/ou **en ce que** la valeur S_{d} est comprise entre 0,07 m et 0,1 m en présence d'une humidité relative de 80 %, en particulier inférieure à 0,1 m et/ou **en ce que** la valeur S_{d} est inférieure à 0,09 m en présence d'une humidité relative de 90 %.

3. Couche de protection (9) selon la revendication 1, **caractérisée en ce que** la valeur S_{d} est comprise entre 10 m et 30 m en présence d'une humidité relative de 37,5 %, mais est inférieure en présence d'une humidité relative de 25 % et/ou **en ce que** la valeur S_{d} est comprise entre 5 m et 15 m en présence d'une humidité relative de 65,5 %, mais inférieure en présence d'une humidité relative de 37,5 % et/ou **en ce que** la valeur S_{d} est comprise entre 0,8 m et 5 m en présence d'une humidité relative de 80 %, en particulier entre 1 m et 3 m, et/ou **en ce que** la valeur S_{d} est comprise entre 0,08 m et 0,12 m en présence d'une humidité relative de 90 %, en particulier inférieure à 0,1 m.

4. Couche de protection (9) selon l'une quelconque des revendications précédentes, **caractérisée en ce que** le matériau est conçu sous forme d'une structure en feuille, notamment sous forme de feuille et/ou de revêtement d'un matériau support, plus particulièrement encore sous forme de revêtement par pulvérisation d'un matériau support et/ou comprend une telle structure en feuille.

5. Couche de protection (9) selon l'une quelconque des revendications précédentes, **caractérisée en ce que** le matériau comprend un polyamide (PA), en particulier du PA 6, du PA 3 et/ou un copolymère de polyamide et/ou peut être obtenu à partir d'un polyamide, en particulier du PA 6, du PA 3 et/ou d'un copolymère de polyamide, en tant que matériau de départ et éventuellement d'autres composants et/ou est constitué d'un polyamide, en particulier de PA 6, de PA 3 et/ou d'un copolymère de polyamide.

6. Couche de protection (9) selon l'une quelconque des revendications précédentes, **caractérisée en ce que** le matériau comprend un ionomère et/ou peut être obtenu à partir d'un ionomère en tant que matériau de départ et éventuellement d'autres composants et/ou est constitué d'un ionomère.

7. Couche de protection (9) selon l'une quelconque des revendications précédentes, **caractérisée en ce que** le matériau comprend un homo- ou copolymère éthylène-alcool vinylique et/ou peut être obtenu à partir d'un homo- ou copolymère éthylène-alcool vinylique en tant que matériau de départ et éventuellement d'autres composants et/ou est constitué d'un homo- ou copolymère éthylène-alcool vinylique.

8. Couche de protection (9) selon l'une quelconque des revendications précédentes, **caractérisée en ce que** le matériau comprend un polyuréthane thermoplastique (TPU) et/ou peut être obtenu à partir d'un polyuréthane thermoplastique en tant que matériau de départ et éventuellement d'autres composants et/ou est constitué d'un polyuréthane thermoplastique.

9. Couche de protection (9) selon l'une quelconque des revendications précédentes, **caractérisée en ce que** le matériau comprend un éthylène-acétate de vinyle (EVA) comme matériau de départ et/ou peut être obtenu à partir d'un éthylène-acétate de vinyle et éventuellement d'autres composants et/ou est constitué d'un éthylène-acétate de vinyle.

10. Couche de protection (9) selon l'une quelconque des revendications précédentes, **caractérisée en ce qu'**une modification de l'humidité relative de l'atmosphère entourant la couche de protection (9) entraîne une modification décalée dans le temps de l'épaisseur équivalente de diffusion de vapeur d'eau de la couche d'air S_{d} du matériau, de préférence une augmentation de l'humidité relative entraînant une réduction de l'épaisseur équivalente de diffusion de vapeur d'eau de la couche d'air S_{d} du matériau après 2 h à 96 h, en particulier après 12 h à 72 h, plus particulièrement après 24 h à 48 h.

11. Utilisation d'une couche de protection (9) selon l'une quelconque des revendications précédentes dans une structure isolée (10), en particulier une construction isolée de toit et/ou de mur d'un bâtiment, pour protéger au moins une couche d'isolation thermique (10) de la construction de bâtiment (10), au moins une couche de protection hygrovariable (9) étant prévue sur une face externe (12) de la couche d'isolation thermique (11) ou sur une face interne (13) de la couche d'isolation thermique (11) orientée vers l'intérieur du bâtiment.

12. Utilisation d'une couche de protection (9) selon l'une quelconque des revendications 1 à 10 dans une structure isolée (10), en particulier une structure isolée de toit et/ou de mur d'un bâtiment, pour protéger au moins une couche d'isolation thermique (10) de la structure de bâtiment (10), au moins une couche de protection hygrovariable (9) étant prévue sur une face externe (12) de la couche d'isolation thermique (11) et sur une face interne (13) de la couche d'isolation thermique (11) orientée vers l'intérieur du bâtiment.

13. Utilisation d'une couche de protection (9) selon la revendication 11 ou 12, **caractérisée en ce qu'**une couche de protection (9) selon l'une des revendications 1 à 10 est prévue sur la face externe (12) de la couche d'isolation thermique (11) et sur la face interne (13) de la couche d'isolation thermique (11).

14. Utilisation d'une couche de protection (9) selon la revendication 13, **caractérisée en ce que** les épaisseurs équivalentes de diffusion de vapeur d'eau de la couche d'air S_{d} des deux couches de protection (9) divergent l'une de l'autre de moins de 20 %, de préférence de moins de 10 %, dans la gamme d'humidité relative de 0 % à 25 % ou dans la gamme d'humidité relative de 80 % à 100 %.

15. Utilisation d'une couche de protection (9) selon la revendication 13, **caractérisée en ce que** les épaisseurs équivalentes de diffusion de vapeur d'eau de la couche d'air S_{d} des deux couches protectrices (9) divergent l'une de l'autre de moins de 20 %, de préférence de moins de 10 % dans la gamme d'humidité relative de 0 % à 25 % et dans la gamme d'humidité relative de 80 % à 100 %.
